# FASCICULE DE BREVET EUROPEEN

(11) **EP 0 747 653 B1**
(45) Date de publication et mention de la délivrance du brevet: **14.04.1999**
(21) Numéro de dépôt: 95401101.1
(22) Date de dépôt: 11.05.1995
(51) Int. Cl.: F41A 25/26, F16B 21/16

(54) **Ensemble comprenant un élément, une tige mobile en translation axiale par rapport à cet élément et une pièce de blocage**
Gegenstand ein erstes Element umfassend, eine Stange die relativ zu diesen ersten Element gleiten kann, und eine Verriegelungsvorrichtung
Assembly comprising a first element, a rod able to slide relatively to this element, and a locking device

(43) Date de publication de la demande: 11.12.1996
(73) Titulaire: GIAT INDUSTRIES, 78000 Versailles (FR)
(72) Inventeur: Balbo, Patrick, F-18000 Bourges (FR); Malassenet, Guy, F-18110 Pigny (FR); Grelat, Philippe, F-18000 Bourges (FR); Mandereau, Fabienne, F-18500 Sainte Thorette (FR)
(74) Mandataire: Célanie, Christian

(56) Documents cités:
- CH-A- 35 462
- DE-U- 8 610 303
- FR-A- 1 500 793
- GB-A- 100 801
- US-A- 2 029 174
- US-A- 2 226 777
- US-A- 2 402 693
- US-A- 2 960 359

## Description

L'invention concerne un ensemble comprenant un élément, une tige mobile en translation axiale par rapport à cet élément, et une pièce de blocage amovible.

L'invention vise notamment les tiges de frein ou de récupérateur d'arme, notamment de pièce d'artillerie.

Sur une pièce d'artillerie, lorsque l'on souhaite transmettre des efforts depuis la bouche à feu jusqu'à la tourelle ou l'affût, il est généralement nécessaire de passer par des liens élastiques, tels qu'un vérin, accouplés au manchon de culasse de façon amovible par divers dispositifs.

On connaît notamment un dispositif dans lequel une bride en demi-coquille peut être vissée à une face latérale du manchon de culasse pour emprisonner un tenon solidaire de la tige de frein.

Toutefois, si l'extrémité de la tige n'est pas voisine des faces latérales du manchon mais arrive profondément dans le manchon, il est nécessaire d'effectuer une longue saignée sur la face latérale du manchon pour accéder à cette extrémité. Or cela fragilise et allège le manchon qui au contraire doit être lourd et robuste.

D'autres dispositifs permettent de fixer la tige à la face arrière du manchon. Par exemple, un système d'adents permet d'engager l'extrémité de la tige dans un orifice du manchon et de bloquer la tige en translation par une rotation d'un quart de tour autour de son axe.

Toutefois, ce dispositif est difficile à usiner et donc onéreux, surtout si la tige est engagée profondément à l'intérieur du manchon.

On peut aussi engager dans un taraudage du manchon coaxial à la tige un écrou monté sur la tige afin d'interdire la translation de la tige. Mais si la tige est très enfoncée dans le manchon, cette solution exige un temps de montage et de démontage trop long de sorte qu'elle en devient dissuasive.

On connaît par le document DE-U-8610303 un système de fixation d'une conduite hydraulique sous haute pression à un raccord rapide. Ce document forme une base pour le préambule de la revendication 1. Le système utilise une épingle de liaison coopérant avec une gorge réalisée sur un manchon d'extrémité de la conduite. Un tel dispositif permet une liaison rapide mais il est totalement inadapté à une transmission d'efforts importants.

Ces solutions ne sont donc pas du tout adaptées pour des tiges dont l'extrémité entre profondément dans le manchon. C'est pourquoi l'invention a pour but de proposer une solution pour la fixation amovible de la tige au manchon autorisant un montage et un démontage rapides et faciles sans nuire à la solidité et à la lourdeur du manchon ni à la simplicité des usinages à effectuer.

L'invention vise donc un ensemble comprenant :
- un élément comprenant un conduit cylindrique ;
- une tige comprenant au moins une encoche prévue dans le pourtour de la tige, ladite tige étant mobile en translation axiale dans ledit conduit, le conduit étant coaxial à ladite tige dans sa position de montage ; et
- une pièce de blocage comportant au moins une languette pour la fixation amovible de ladite tige, ladite pièce de blocage étant agencée pour être associée audit élément dans une première position de montage dans laquelle ladite languette s'étend sensiblement orthogonalement à ladite tige et est reçue dans ladite encoche prévue dans le pourtour de ladite tige, la pièce de blocage interdisant dans la position de montage la translation relative de ladite tige, cet ensemble étant agencé pour :
- supporter ladite pièce de blocage et interdire son déplacement sous l'action de la tige ou de l'élément dès que la pièce de blocage occupe la première position ; et
- guider en translation ladite pièce de blocage par rapport audit élément entre ladite première position et une deuxième position dans laquelle la pièce de blocage peut être aisément installée ou ôtée par l'utilisateur, ledit guidage ayant lieu dans un plan sensiblement orthogonal à l'axe de ladite tige lorsque la tige se trouve dans sa position de montage, ladite pièce de blocage se déplaçant dan un évidement tubulaire cylindrique prévu dans ledit élément ;
caractérisé en ce que ladite pièce de blocage comprend une partie tubulaire cylindrique agencée pour permettre le coulissement de la pièce dans ledit évidement, ledit évidement débouchant au niveau dudit conduit ; en ce que laface inférieure de ladite languette est plane et, dans la position de montage de ladite pièce de blocage, parallèle au plan défini par les axes et dudit évidement et dudit conduit ; et en ce que ladite languette présente deux bords, un premier bord de la languette étant orthogonal à la tige lorsque la pièce de blocage est dans sa position de montage , et un deuxième bord opposé au premier bord, ce deuxième bord étant légèrement incliné vers la base de la languette pour constituer un rétrécissement dirigé en direction de l'extrémité de la languette, extrémité qui est opposé à la base de la languette.

Selon l'invention, cet ensemble est donc agencé pour dès que la pièce de blocage occupe une première position, supporter la pièce de blocage et interdire son déplacement sous l'action de la tige ou de l'élément.

Aussi la tige est-elle immobilisée dès que la pièce de blocage est installée dans la première position. Il n'est donc pas nécessaire, une fois la pièce de blocage en place, d'employer des moyens spécifiques de fixation pour l'immobiliser, ce qui pourrait compliquer l'usinage ou augmenter les temps de montage et démontage.

Il suffit à l'utilisateur de pousser la pièce de blocage jusqu'à la première position pour que la tige se trouve immobilisée, ou de la tirer pour le démontage.

Cet ensemble est parfaitement adapté à tous les dispositifs nécessitant la fixation amovible à un élément d'une tige coulissante. Dans le domaine des pièces d'artillerie, elle peut être avantageusement utilisée pour toutes les configurations de tiges de frein ou de récupérateur, y compris dans les cas courants d'assemblage par les faces arrières ou latérales du manchon. De plus, elle est particulièrement adaptée au cas des tiges de rein s'engageant profondément dans le manchon.

De plus, l'ensemble se trouve ainsi agencé pour guider la pièce de blocage par rapport à l'élément entre la première position et une deuxième position dans laquelle la pièce de blocage peut être aisément installée ou ôtée par l'utilisateur.

On facilite ainsi encore le montage et le démontage de la pièce puisque l'ensemble assure lui-même le guidage de la pièce jusqu'à la première position et à partir de celle-ci. L'utilisateur peut donc effectuer les manoeuvres de montage et de démontage de la pièce de blocage très rapidement et sans craindre les erreurs de positionnement.

La pièce de blocage étant contrainte de se mouvoir dans un plan sensiblement orthogonal à l'axe de la tige, aucune action de la tige ou de l'élément sur la pièce de blocage ne peut provoquer son déplacement de sorte que la pièce permet effectivement de bloquer la tige relativement à l'élément dès qu'elle est installée. Bien entendu, il ne s'agit là que d'une version possible de réalisation de l'invention. De plus, le guidage de la pièce peut être mis en oeuvre par des moyens simples et classiques permettant une installation et un retrait immédiats de la pièce de blocage.

Avantageusement, la pièce de blocage comprend deux languettes parallèles s'étendant de part et d'autre de la tige, la tige comportant deux encoches.

La paroi de l'évidement pourra présenter une cavité agencée pour permettre l'installation d'un organe de butée à l'encontre de la sortie de la pièce hors de l'évidement.

Selon d'autres caractéristiques, l'encoche constitue une partie d'une gorge annulaire de la tige.

La pièce de blocage pourra alors présenter au moins une face usinée en secteur de cylindre destinée à venir en appui sur au moins un des bords de la gorge de la tige.

Et la languette pourra être unie à sa base de deux faces parallèles coopérant avec les bords latéraux de la gorge de la tige.

D'autres caractéristiques et avantages de l'invention apparaîtront encore dans la description qui va suivre d'un mode préféré de réalisation. Aux dessins annexés donnés à titre d'exemple non-limitatif :
- la figure 1 est une vue en perspective d'un mode de réalisation de l'ensemble selon l'invention compris dans une arme ;
- la figure 2 est une vue en coupe selon le plan II-II de la figure 1 ;
- la figure 3 est une vue semblable à la figure 2 montrant l'ensemble en position de blocage de la tige ;
- la figure 4 est une vue en perspective de la pièce de blocage ; et
- la figure 5 est une vue agrandie du détail D de la figure 4 ;

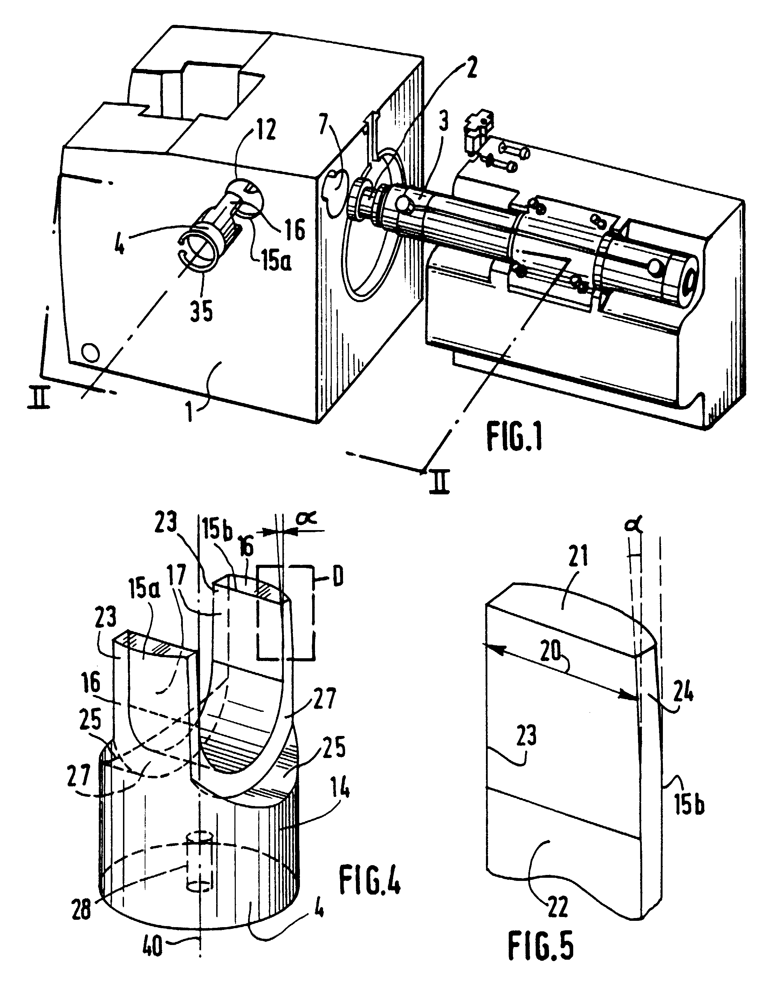

Les figures 1, 2 et 3 présentent un mode de réalisation de l'ensemble selon l'invention, monté sur une arme, ici une pièce d'artillerie classique.

L'ensemble comprend un élément 1 qui est ici le manchon de culasse de l'arme, et une tige 2 d'axe 8 mobile en translation axiale par rapport à ce manchon 1. La tige 2 est une tige de frein de l'arme, ce frein étant réalisé ici au moyen d'un vérin 3 comme il est bien connu. La tige 2 est donc la tige du vérin 3.

La tige 2 pourrait aussi être la tige d'un récupérateur classique.

Dans la suite, nous ne considérons que le caractère relatif du mouvement de la tige 2 par rapport au manchon 1.

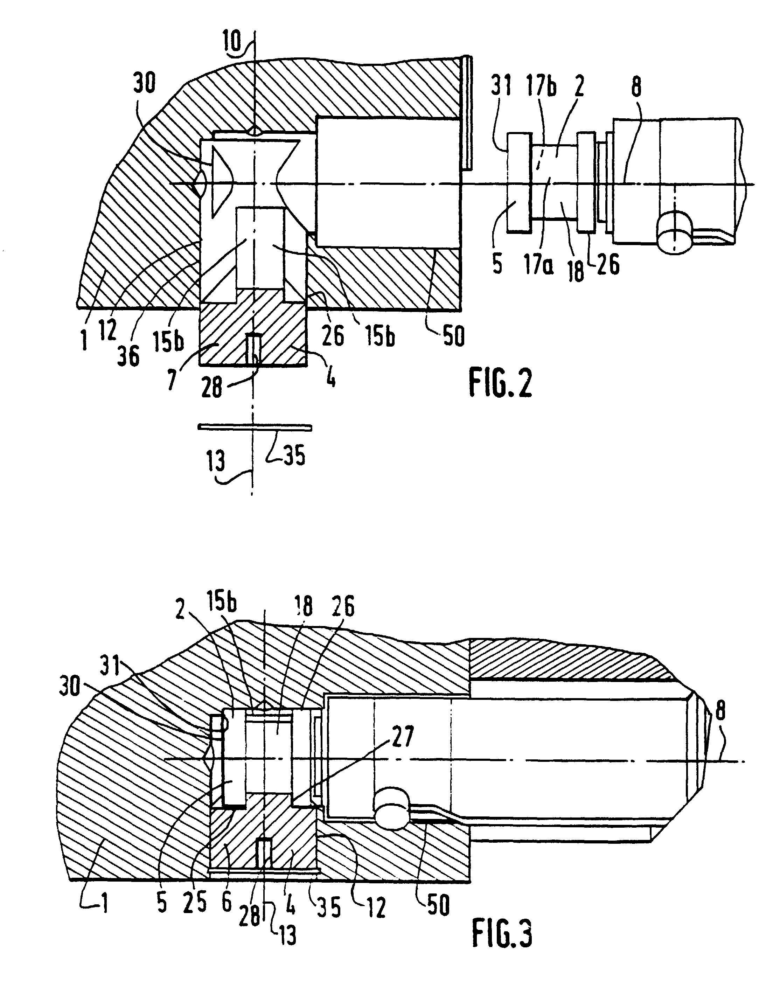

L'ensemble comprend encore une pièce de blocage amovible 4 agencée pour être associée au manchon 1 dans une première position. Dans cette première position 6 représentée sur la figure 3, la pièce de blocage 4 se trouve dans la trajectoire d'une portion 5 du pourtour de la tige 2 et interdit sa translation relativement au manchon 1.

Dans le présent exemple, la tige 2 est en partie mobile à l'intérieur du manchon 1 dans le conduit cylindrique 50 coaxial à la tige 2. De plus, la portion 5 se trouve à l'intérieur du manchon 1 lorsque la pièce de blocage 4 occupe la première position 6. Lorsqu'elle occupe la première position 6, la pièce de blocage 4 se trouve elle aussi sensiblement à l'intérieur du manchon 1.

L'ensemble est agencé pour, dès que la pièce de blocage 4 occupe la première position 6, supporter la pièce de blocage 4 et interdire son déplacement sous l'action de la tige 2 ou du manchon 1.

De plus, l'ensemble est ici agencé pour guider la pièce de blocage 4 par rapport au manchon entre la première position 6 et une deuxième position 7, représentée sur la figure 2, dans laquelle la pièce de blocage 4 peut être aisément installée ou ôtée par l'utilisateur.

Ici, le guidage de la pièce 4 a lieu dans un plan 10 sensiblement orthogonal à l'axe 8 de la tige 2. La trace du plan 10 est visible sur la figure 2 dont le plan de coupe est orthogonal à ce plan 10. De plus, le guidage est ici un guidage en translation. Pour cela, le manchon 1 comprend un évidement tubulaire 12 permettant le guidage de la pièce 4 entre les première 6 et deuxième 7 positions. L'axe 13 de cet évidement est orthogonal à l'axe 8 de la tige 2 et ici horizontal. Dans la position 7, la pièce 4 dépasse en partie à l'extérieur du manchon.

En référence notamment à la figure 4, la pièce 4 comprend une partie tubulaire 14 agencée pour permettre le coulissement de la pièce 4 dans l'évidement 12. L'évidement 12 et la partie tubulaire 14 sont ici cylindriques. Les dimensions de l'évidement et de la partie tubulaire sont adaptées à permettre le glissement de la pièce 4 sans peine dans l'évidement 12.

Par ailleurs, la pièce 4 comprend deux languettes 15a, 15b parallèles s'étendant sensiblement orthogonalement à la tige 2 de part et d'autre de l'axe 8 de celle-ci lorsque la pièce 4 occupe la première position 6. Les deux languettes sont symétriques l'une de l'autre par rapport à un plan contenant l'axe 40 de la pièce 4.

La face extérieure 16 des languettes 15a, 15b est dans le prolongement de la partie cylindrique 14 de sorte que cette face 16 est géométriquement supportée par le cylindre de la partie cylindrique 14.

Les faces intérieures 17 des languettes 15a, 15b sont planes et parallèles au plan défini par les axes 13 et 8 en position 6 de la pièce 4. Les languettes 15a, 15b constituent ainsi un "U" à l'extrémité de la pièce 4, dirigé vers l'axe 8 de la tige 2.

Le pourtour de la tige 2 comprend deux encoches 17a, 17b adaptées à recevoir respectivement les languettes 15a, 15b. Les encoches 17a, 17b constituent ici une partie d'une gorge annulaire 18 du pourtour de la tige 2.

Les languettes 15a, 15b, engagées dans la gorge 18 en première position 6 de la pièce 4, constituent un obstacle au mouvement relatif de la tige 2 par rapport au manchon 1.

Au besoin, l'ensemble pourrait comprendre une seule languette coopérant avec une seule encoche.

En référence aux figures 4 et 5, chaque languette 15a, 15b présente, parallèlement à la direction de l'axe 8 de la tige 2, un rétrécissement 20 en direction de son extrémité 21 opposée à la base 22 de la languette. Chaque languette 15a, 15b est donc moins large à son extrémité 21 qu'à sa base 22.

En référence à la figure 5, un premier bord 23 de chaque languette 15a, 15b est orthogonal à l'axe 8 de la tige lorsque la pièce 4 est dans la première position 6 comme sur la figure 4. Le deuxième bord 24 de chaque languette, opposé au premier bord 23, est légèrement incliné d'un angle α vers la base 22 de la languette pour constituer le rétrécissement 20. Ce rétrécissement est tel que l'extrémité des languettes peut facilement pénétrer entre les bords de la gorge 18 et que l'ajustement des languettes par les bords 23 et la base des bords 24 entre les bords de la gorge 18 est serré.

L'extrémité de la partie cylindrique 14 située du côté des languettes est usinée pour présenter deux faces 25 en secteur de cylindre d'axe orthogonal à l'axe 40 de la partie cylindrique 14 afin d'épouser les sommets 26 des bords de la gorge 18 également en secteurs de cylindre. Cette extrémité présente aussi deux faces 27 parallèles au plan 10 en première position 6 de la pièce 4, destinées à venir en contact avec les bords latéraux internes de la gorge 18 dans la première position 6, pour elles aussi participer au blocage de la tige 2. Les faces 27 se trouvent dans le prolongement des bords 23 et 24 des languettes 15a, 15b.

En référence aux figures 2 et 3, la paroi 36 de l'évidement 12 présente une cavité 26 agencée pour permettre l'installation d'un organe de butée 35 à l'encontre de la sortie de la pièce 4 hors de la première position 6. Ici, cette cavité 26 est une gorge transversale annulaire adaptée à recevoir l'organe de butée qui est ici un bracelet élastique 35 classique dans d'autres domaines d'application. Ce bracelet 35 dépasse dans l'évidement 12 lorsqu'il est installé dans la gorge 26 et bloque ainsi la sortie de la pièce 4.

Une vis non-représentée est installée dans l'orifice axial 28 de la partie cylindrique 14 à l'opposé des languettes 15a, 15b.

Dans la position bloquée de la tige 2, l'extrémité 31 de la tige est en contact avec la surface de butée 30 du manchon orthogonale à l'axe 8.

L'ensemble est utilisé de la façon suivante.

Pour bloquer la tige 2, on manoeuvre l'arme de façon à amener la tige 2 dans leconduit 50 jusqu'à placer l'extrémité 31 de la tige 2 en contact avec la face de butée 30 du manchon.

L'utilisateur saisit alors la pièce de blocage 4 et la place dans la deuxième position 7 avec les languettes à la verticale l'une de l'autre, puis il la pousse dans l'évidement 12 du manchon. Guidée dans cet évidement, la pièce 4 arrive jusqu'à la première position 6. Au cours de ce mouvement, les languettes 15a, 15b s'engagent progressivement entre les bords de la gorge 18, facilement d'abord à cause du rétrécissement 30 puis avec un ajustement serré contre les bords de la gorge 18 en fin de course de la pièce de blocage 4, les faces 27 de la pièce 4 étant également en contact avec les bords de la gorge 18 et participant au serrage.

Le bracelet élastique 35 est ensuite installé dans la gorge 26 pour empêcher la sortie de la pièce de blocage 4. Il ne s'agit pas en cela de bloquer la pièce 4 à l'encontre du mouvement de la tige 2, mais de prévenir la sortie accidentelle de la pièce 4 en cas de choc ou d'inclinaison de l'arme.

La position 6 de la pièce de blocage 4 dans le manchon 1 est telle que toute translation de la tige est interdite, compte tenu de l'engagement des languettes 15a, 15b dans la gorge 18, et ce, dès l'instant où la pièce de blocage 4 occupe la première position 6 dans laquelle elle est supportée par le manchon 1. La transmission des efforts en translation entre la tige 2 et la manchon 1 s'effectue par l'intermédiaire des languettes 15a, 15b et de la partie cylindrique 14.

Pour débloquer la tige, l'utilisateur ôte le bracelet 35, tire la pièce 4 dans l'évidement 12 à l'aide de la vis précitée puis hors du manchon 1, .

La tige peut donc être bloquée et débloquée très rapidement et très facilement. Le rétrécissement 20 des languettes permet d'installer facilement la pièce 4 dans la première position 6 tout en bloquant très efficacement la tige 2 par serrage avec la pièce 4 et le manchon 1.

Bien entendu, on pourra apporter à l'invention de nombreuses modifications et améliorations sans sortir du cadre tel qu'il a été défini par les revendications.

## Revendications

1. Ensemble comprenant :
- un élément (1) comprenant un conduit cylindrique (50) ;
- une tige (2) comprenant au moins une encoche (17a, 17b) prévue dans le pourtour de la tige, ladite tige étant mobile en translation axiale dans ledit conduit (50), le conduit (50) étant coaxial à ladite tige (2) dans sa position de montage ; et
- une pièce de blocage (4) comportant au moins une languette (15a, 15b) pour la fixation amovible de ladite tige, ladite pièce de blocage (4) étant agencée pour être associée audit élément (1) dans une première position de montage (6) dans laquelle ladite languette (15a, 15b) s'étend sensiblement orthogonalement à ladite tige (2) et est reçue dans ladite encoche (17a, 17b) prévue dans le pourtour de ladite tige (2), la pièce de blocage interdisant dans la position de montage la translation relative de ladite tige, cet ensemble étant agencé pour :
- supporter ladite pièce de blocage (4) et interdire son déplacement sous l'action de la tige (2) ou de l'élément (1) dès que la pièce de blocage (4) occupe la première position (6) ; et
- guider en translation ladite pièce de blocage (4) par rapport audit élément (1) entre ladite première position (6) et une deuxième position (7) dans laquelle la pièce de blocage (4) peut être aisément installée ou ôtée par l'utilisateur, ledit guidage ayant lieu dans un plan (10) sensiblement orthogonal à l'axe de ladite tige (2) lorsque la tige se trouve dans sa position de montage, ladite pièce de blocage (4) se déplaçant dans un évidemment (12) tubulaire cylindrique prévu dans ledit élément ; caractérisé en ce que ladite pièce de blocage (4) comprend une partie tubulaire cylindrique (14) agencée pour permettre le coulissement de la pièce (4) dans ledit évidemment (12), ledit évidemment débouchant au niveau dudit conduit (50) ; en ce que la face inférieure (17) de ladite languette (15a, 15b) est plane et, dans la position de montage de ladite pièce de blocage (4), parallèle au plan défini par les axes (13) et (8) dudit évidemment (12) et dudit conduit (50) ; et en ce que ladite languette (15a, 15b) présente deux bords (23, 24), un premier bord (23) de la languette (15a, 15b) étant orthogonal à la tige (2) lorsque la pièce de blocage (4) est dans sa position de montage (6), et un deuxième bord (24) opposé au premier bord (23), ce deuxième bord étant légèrement incliné vers la base (22) de la languette (15a, 15b) pour constituer un rétrécissement (20) dirigé en direction de l'extrémité (21) de la languette, extrémité qui est opposée à la base (22) de la languette.

2. Ensemble selon la revendication 1, caractérisé en ce que la pièce de blocage (4) comprend deux languettes (15a, 15b) parallèles s'étendant de part et d'autre de la tige (2), la tige comportant deux encoches (17a, 17b).

3. Ensemble selon la revendication 1 ou 2, caractérisé en ce que la paroi de l'évidement (12) présente une cavité (26) agencée pour permettre l'installation d'un organe de butée (27) à l'encontre de la sortie de la pièce de blocage (4) hors de l'évidement (12).

4. Ensemble selon une des revendications 1 à 3, caractérisé en ce que l'encoche (17a, 17b) constitue une partie d'une gorge annulaire (18) de la tige (2).

5. Ensemble selon la revendication 4, caractérisé en ce que la pièce de blocage (4) présente au moins une face (25) usinée en secteur de cylindre destinée à venir en appui sur au moins un des bords de la gorge (18) de la tige (2).

6. Ensemble selon la revendication 5, caractérisé en ce que la languette (15) est munie à sa base de deux faces parallèles (27) coopérant avec les bords latéraux de la gorge (18) de la tige (2).

## Patentansprüche

1. Einheit mit:
- einem Element (1) mit einer zylindrischen Leitung (50),
- einer Stange (2) mit mindestens einer Kerbe (17a, 17b), die im äußeren Umfang der Stange vorgesehen wird, während die besagte Stange in axialer Verschiebung in besagter Leitung (50) beweglich ist und die Leitung (50) zur Stange (2) in ihrer Montageposition koaxial steht; und
- einem Sperrteil (4) mit mindestens einer Zunge (15a, 15b) zum abnehmbaren Befestigen besagter Stange, wobei das Sperrteil (4) so ausgelegt ist, daß es mit besagtem Element (1) in einer ersten Montageposition (6) assoziiert wird, wobei sich die Zunge (15a, 15b) in dieser ersten Position (6) in etwa senkrecht zur besagten Stange (2) erstreckt und in besagter Kerbe (17a, 17b) aufgenommen wird, die im äußeren Umfang der besagten Stange (2) vorgesehen ist, während das Sperrteil in der Montageposition die relative Verschiebung der besagten Stange (2) untersagt und die Einheit insgesamt zu folgendem Zweck ausgelegt ist :
- Tragen des besagten Sperrteils (4) und Unterbinden seiner Verschiebung unter der Einwirkung der Stange (2) oder des Elements (1), sobald sich das Sperrteil (4) in der ersten Position (6) befindet; und
- Führen des besagten Sperrteils (4) bei der Verschiebung in bezug auf das besagte Element (1) zwischen der ersten Position (6) und einer zweiten Position (7), in der das Sperrteil (4) leicht vom Benutzer installiert oder entfernt werden kann, wobei das besagte Führen in einer Ebene (10) stattfindet, die zur Achse der besagten Stange (2) in etwa senkrecht ist, wenn sich die Stange (2) in ihrer Montageposition befindet, wobei sich das besagte Sperrteil (4) in einer röhrenförmigen, zylindrischen Aussparung (12) bewegt, die in diesem Element vorgesehen ist; gekennzeichnet dadurch, daß das besagte Sperrteil (4) einen zylindrischen, röhrenförmigen Teil (14) umfaßt, der eingerichtet wird, um das Gleiten des Sperrteils (4) in besagter Aussparung (12) zu erlauben, wobei die besagte Aussparung auf der Ebene der besagten Leitung (50) mündet; und gekennzeichnet dadurch; daß die untere Fläche (17) der besagten Zunge (15a, 15b) eben ist und in der Montageposition des besagten Sperrteils (4) zu der Ebene parallel liegt, die von den Achsen (13) und (8) der besagten Aussparung (12) und der besagten Leitung (50) gebildet wird; und gekennzeichnet dadurch, daß die besagte Zunge (15a, 15b) zwei Ränder (23, 24) aufweist, wobei ein erster Rand (23) der Zunge (15a, 15b) zur Stange (2) senkrecht steht, wenn sich das Sperrteil (4) in seiner Montageposition (6) befindet, und einen zweiten Rand (24), der dem ersten Rand (23) gegenüberliegt und leicht zur Basis (22) der Zunge (15a, 15b) geneigt ist, um eine Verjüngung (20) zu bilden, die in Richtung des Endes (21) der Zunge zeigt, welches Ende der Basis (22) der Zunge gegenüberliegt.

2. Einheit gemäß dem Anspruch 1, gekennzeichnet dadurch, daß das Sperrteil (4) zwei parallele Zungen (15a, 15b) umfaßt, die sich zu beiden Seiten der Stange (2) erstrecken, wobei die Stange zwei Kerben (17a, 17b) aufweist.

3. Einheit gemäß dem Anspruch 1 oder 2, gekennzeichnet dadurch, daß die Wand der Aussparung (12) einen Hohlraum (26) aufweist, der eingerichtet wird, um das Installieren eines Anschlagorgans (27) zu erlauben, auf das das Sperrteil (4) beim Austreten aus der Aussparung (12) trifft.

4. Einheit gemäß einem der Ansprüche 1 bis 3, gekennzeichnet dadurch, daß die Kerbe (17a, 17b) einen Teil einer ringförmigen Hohlkehle (18) der Stange (2) bildet.

5. Einheit gemäß dem Anspruch 4, gekennzeichnet dadurch, daß das Sperrteil (4) mindestens eine mit einem Zylinderquerschnitt bearbeitete Fläche (25) aufweist, die auf mindestens einen der Ränder der Hohlkehle (18) der Stange (2) zu liegen kommt.

6. Einheit gemäß dem Anspruch 5, gekennzeichnet dadurch, daß die Zunge (15) an ihrer Basis mit zwei parallelen Flächen (27) versehen ist, die mit den seitlichen Rändern der Hohlkehle (19) und der Stange (2) zusammenwirken.

## Claims

1. An assembly comprising :
- an element (1) comprising an hydraulic channel (50),
- a rod (2 ) comprising at least one notch (17a, 17b) arranged around the rod, said rod being mobile in axial translation in said channel (50), the channel (50) being coaxial with said rod (2) in its assembling position, and
- a blocking part (4) comprising at least one tab (15a, 15b) for movable attachment of said rod, said blocking part (4) being arranged to be associated with said element (1) in a first position (6) in which said tab (15a, 15b) extends roughly orthogonally to said rod (2) and is received in said notch (17a, 17b) arranged around the rod (2), the blocking part prevents in its assembling position the relative translation of said rod, this assembly being arranged to :
- support the blocking part (4) and prevent its movement under the action of the rod (2) or of the element (1) as soon as the blocking part (4) is in the first position (6), and
- guide in translation said blocking part (4) in respect to the element (1) between the first position (6) and a second position (7) wherein the blocking part (4) may be easily put into position or removed by the user, said guiding takes place in a plane (10) which is roughly orthogonal to the axis of the rod (2) when the rod is in its assembling position, said blocking part (4) moving in a cylindrical tubular recess (12) arranged in said element, characterised in that said blocking part (4) comprises a cylindrical tubular part (14) arranged to enable the part (4) to slide in the recess (12), said recess emerging at the level of said channel (50),
in that the inner face (17) of said tab (15a, 15b) is flat and parallel in the assembling position of said blocking part (4) to the plane defined by the axis (13) and (8) of said recess (12) and said channel (50),
in that said tab (15a, 15b) is provided with two edges (23, 24), a first edge (23) of the tab (15a, 15b) being orthogonal to the rod (2) when the blocking part (4) is in its assembling position, and a second edge (24) opposite to the first edge (23), this second edge being slightly inclined towards the base (22) of the tab (15a, 15b) to form the said narrowed part (20) directed towards the end (21) of the tab, end opposite to the base (22) of the tab.

2. An assembly according to Claim 1, characterised in that the blocking part (4) comprises two parallel tabs (15a, 15b) extending on both sides of said rod (2), the rod comprising two notches (17a, 17b).

3. An assembly according to Claim 1 or 2, characterised in that the wall of the recess (12) has a cavity (26) arranged to allow a stopping organ (27) to be put in place opposing the movement of the part (4) out of the recess (12).

4. An assembly according to one of Claims 1 to 3, characterised in that the notch (17a, 17b) is a part of an annular grove (18) of the rod (2).

5. An assembly according to Claim 4, characterised in that the blocking part (4) is provided with a face (25) machined in cylindrical sector intended to come in contact with at least one of the edge of the groove (18) of the rod (2).

6. An assembly according to Claim 5, characterised in that the tab (15) comprises two parallel faces (27) lying at its bottom cooperating with the side rims of the groove (18) of the rod (2).
